(19) Europäisches Patentamt
European Patent Office
Office européen des brevets

(11) **EP 3 161 951 B1**

(12) **FASCICULE DE BREVET EUROPEEN**

(45) Date de publication et mention de la délivrance du brevet:
**19.05.2021 Bulletin 2021/20**

(21) Numéro de dépôt: **15742360.9**

(22) Date de dépôt: **29.06.2015**

(51) Int Cl.:
*H02M 3/156* *(2006.01)*    *H02M 3/335* *(2006.01)*
*H02M 3/337* *(2006.01)*    *H02M 3/158* *(2006.01)*
*H02M 3/28* *(2006.01)*    *H02M 1/00* *(2006.01)*

(86) Numéro de dépôt international:
**PCT/FR2015/051771**

(87) Numéro de publication internationale:
**WO 2016/001561 (07.01.2016 Gazette 2016/01)**

(54) **CONVERTISSEUR DE TENSION COMPRENANT UN CIRCUIT CONVERTISSEUR DC/DC ISOLE**

SPANNUNGSWANDLER MIT EINER ISOLIERTEN GLEICHSTROMWANDLERSCHALTUNG

VOLTAGE CONVERTER COMPRISING AN ISOLATED DC/DC CONVERTER CIRCUIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.06.2014 FR 1456219**

(43) Date de publication de la demande:
**03.05.2017 Bulletin 2017/18**

(73) Titulaire: **Valeo Siemens eAutomotive France SAS 95800 Cergy (FR)**

(72) Inventeurs:
• **SADKI, Hicham**
  **95000 Cergy (FR)**
• **BENDANI, Larbi**
  **60110 Meru (FR)**

(74) Mandataire: **Argyma**
  **14 Boulevard de Strasbourg**
  **31000 Toulouse (FR)**

(56) Documents cités:
EP-A2- 1 763 124    DE-A1-102011 000 708
JP-A- H08 228 486    US-A- 5 274 539
US-A1- 2004 022 075    US-A1- 2013 336 017
US-B1- 6 272 023

• **Marian K. Kazimierczuk: "Chapter 13: Current-mode Control" In: "Pulse-Width Modulated DC-DC Power Converters", 16 septembre 2008 (2008-09-16), John Wiley & Sons, Ltd., U.K., XP055174330, ISBN: 978-0-47-069464-0 pages 511-570, DOI: 10.1002/9780470694640.ch13, le document en entier**
• **James P. Johnson: "Chapter 11: DC-DC Converters" In: "Handbook of Automotive Power Electronics and Motor Drives", 2005, CRC Press, XP055174704, ISSN: 2155-5192 ISBN: 978-1-42-002815-7 pages 231-254, DOI: 10.1201/9781420028157.pt3, Section 11.3**

EP 3 161 951 B1

**Description**

La présente invention concerne un convertisseur de tension comprenant un circuit convertisseur DC/DC isolé, un dispositif de conversion de tension comprenant un entrelacement de convertisseurs selon l'invention, ainsi qu'un procédé de conversion de tension mis en œuvre avec le convertisseur selon l'invention.

Les convertisseurs DC/DC (pour « direct current/direct current » en anglais) isolés peuvent présenter des commutations à zéro de tension ou ZVS (pour « zero voltage switching » en anglais) ou des commutations à zéro de courant ou ZCS (pour « zero current switching » en anglais) qui permettent de réduire les pertes par commutation lors de la conversion de tension. Ces convertisseurs sont donc particulièrement avantageux dans une application automobile où la ressource en énergie est limitée. Dans un véhicule, on peut utiliser un convertisseur de tension pour adapter des niveaux de tension entre plusieurs réseaux électriques du véhicule ou pour convertir une tension entre une source d'énergie et un consommateur électrique embarqué dans le véhicule.

On connaît un convertisseur selon le préambule de la revendication 1 du brevet US5274539.

On connait un convertisseur de tension DC/DC isolé du brevet US5754413, illustré en figure 1. Le convertisseur comprend deux interrupteurs, agencés en demi-pont, qui sont connectés en leur point milieu à une branche qui comprend deux transformateurs en série. Les interrupteurs contrôlent la transmission d'énergie à travers les transformateurs pour obtenir une conversion d'une tension d'entrée du convertisseur en une tension de sortie. Des diodes connectées aux secondaires des transformateurs permettent de redresser le signal de sortie. La tension de sortie est obtenue en contrôlant le rapport cyclique des interrupteurs. En modifiant le rapport cyclique pour atteindre une valeur cible de tension de sortie, on ajuste le gain du convertisseur pour atteindre la valeur cible de tension de sortie. En particulier, lorsque la tension d'entrée du convertisseur DC/DC isolé varie, il est connu de faire varier le rapport cyclique des interrupteurs du convertisseur DC/DC isolé pour réguler sa tension de sortie, c'est-à-dire maintenir sa tension de sortie à une valeur souhaitée.

Cependant, le stress en tension des diodes de redressement est fonction du rapport cyclique des interrupteurs du convertisseur. Ce stress peut devenir important lorsque le rapport cyclique devient proche de 0% ou 100%. Pour limiter le stress en tension des diodes de redressement, il est prévu, pour les deux transformateurs, des rapports de transformations respectifs qui sont différents. Mais cela complique la conception du convertisseur car les transformateurs ne peuvent pas être identiques et le courant au secondaire présente des discontinuités.

En outre, en travaillant avec un rapport cyclique variable, les ondulations de courant en sortie peuvent varier fortement entrainant une variation du rendement du convertisseur. Pour conserver un fonctionnement avec un bon rendement, le rapport cyclique doit être peu variable. Or, dans un véhicule, la tension d'une source d'énergie, telle qu'une batterie, peut varier fortement suivant l'énergie disponible. Une telle variation en entrée du convertisseur implique de faire varier le rapport cyclique de manière correspondante, ce qui limite l'utilisation du convertisseur DC/DC isolé dans un véhicule.

Il est donc recherché une solution pour améliorer les performances d'un convertisseur DC/DC isolé de façon à permettre son utilisation dans un véhicule automobile.

Afin de résoudre ce problème, l'invention concerne un convertisseur selon la revendication 1.

Grâce au circuit de régulation, une valeur souhaitée de tension en sortie du circuit convertisseur DC/DC isolé est obtenue en ajustant la tension appliquée au circuit convertisseur DC/DC isolé. A chaque valeur de tension souhaitée en sortie du circuit convertisseur DC/DC isolé correspond une valeur de tension appliquée au circuit convertisseur DC/DC isolé. Une valeur de tension de sortie souhaitée est obtenue sans modifier le rapport cyclique du circuit convertisseur DC/DC isolé. Le rapport cyclique peut donc être fixé à une valeur qui permet un rendement maximal.

A une tension de sortie donnée du circuit convertisseur DC/DC isolé, le circuit de régulation permet un fonctionnement du circuit convertisseur DC/DC isolé avec un rapport cyclique constant pour une tension d'entrée quelconque, en particulier comprise dans une gamme de fonctionnement du circuit convertisseur DC/DC isolé.

Par exemple, la différence entre la valeur minimale et la valeur maximale de la tension d'entrée du convertisseur est comprise entre 150 et 500V ; par exemple, la valeur minimale de la tension d'entrée est comprise entre 150 et 200 V; et la valeur maximale de la tension d'entrée est comprise entre 400 et 500V, voire entre 400 et 650V.

Le rapport cyclique des interrupteurs du circuit convertisseur DC/DC isolé reste donc constant à une incertitude près.

En particulier, le circuit de régulation comprend des interrupteurs et est tel que son rapport cyclique est ajusté pour obtenir une valeur de tension en sortie du circuit de régulation. Cette valeur de tension est ajustée pour obtenir une valeur de tension souhaitée en sortie du circuit convertisseur DC/DC isolé.

Le circuit de régulation délivre son signal de sortie au circuit convertisseur DC/DC isolé.

Notamment, le circuit de régulation est configuré pour délivrer une tension au circuit convertisseur DC/DC isolé à partir, directement ou indirectement, d'une tension d'entrée du convertisseur de tension.

Le convertisseur de tension peut être un convertisseur continu-continu configuré pour convertir une tension d'entrée continue en une tension de sortie continue.

Le convertisseur de tension peut être un convertisseur alternatif-continu configuré pour convertir une tension alternative en une tension continue. Avantageusement, le convertisseur de tension comprend alors un circuit convertisseur alternatif-continu en amont du circuit de régulation ou un circuit convertisseur continu-alternatif en aval du circuit convertisseur DC/DC isolé. Par des adaptations adéquates, le convertisseur de tension peut être un convertisseur alternatif-alternatif.

Selon un mode de réalisation, le circuit convertisseur DC/DC isolé est configuré de sorte que son rapport cyclique est sensiblement égal à 50%. A un rapport cyclique de 50%, le courant en sortie du circuit convertisseur DC/DC isolé présente des ondulations (« ripples » en anglais) qui sont faibles car les ondulations des courants dans des inductances magnétisantes du circuit convertisseur DC/DC isolé sont compensées.

Selon un mode de réalisation, le circuit de régulation et le circuit convertisseur DC/DC isolé sont dans un seul module. En particulier, le circuit de régulation et le circuit convertisseur DC/DC isolé sont dans un même boitier d'un module électronique ou sur une même carte électronique du module.

Selon un mode de réalisation, le convertisseur comprend un circuit destiné à implémenter une première boucle de façon à asservir une consigne d'un paramètre électrique d'un signal du circuit de régulation à une différence entre la valeur de la tension de sortie du circuit convertisseur DC/DC isolé et une consigne de tension de sortie du circuit convertisseur DC/DC isolé, la consigne du paramètre électrique étant telle que le circuit de régulation délivre au circuit convertisseur DC/DC isolé une valeur de tension correspondant à une valeur respective de tension de sortie du circuit convertisseur DC/DC isolé.

Selon une variante, le convertisseur comprend un circuit destiné à implémenter une deuxième boucle de façon à asservir le paramètre électrique du signal du circuit de régulation à une différence entre la valeur du paramètre électrique et la consigne du paramètre électrique.

Selon une variante, le signal du circuit de régulation est le signal délivré par le circuit de régulation, ou un signal circulant dans le circuit de régulation.

Selon une variante, le paramètre électrique du signal est son courant ou sa tension.

Ainsi, dans une variante, le circuit est destiné à implémenter la première boucle de façon à asservir le courant délivré par le circuit de régulation, ou un courant circulant dans le circuit de régulation, à une différence entre la valeur de la tension de sortie du circuit convertisseur DC/DC isolé et une consigne de tension de sortie du circuit convertisseur DC/DC isolé.

En particulier, le circuit de la première boucle et/ou de la seconde boucle asservissent le paramètre électrique en asservissant des interrupteurs compris dans le circuit de régulation, notamment en asservissant un rapport cyclique d'ouverture ou de fermeture des interrupteurs.

Selon un mode de réalisation, le circuit de régulation est un convertisseur DC/DC de type sepic (pour l'anglais « Single Ended Primary Inductor Converter »), Ćuk, abaisseur (« buck » en anglais), élévateur (« boost » en anglais) ou abaisseur-élévateur (« buck-boost » en anglais).

Selon un mode de réalisation, le circuit convertisseur DC/DC isolé comprend au moins un premier et un deuxième transformateurs d'isolation en série, les interrupteurs permettant de transmettre une énergie à travers le convertisseur DC/DC isolé par l'intermédiaire des transformateurs.

Selon un mode de réalisation, le circuit convertisseur DC/DC est configuré pour que :

- sur une première partie d'une période de fonctionnement, le primaire du premier transformateur réalise une inductance stockant de l'énergie et le primaire du second transformateur transfère une énergie vers le secondaire du second transformateur ;
- sur une deuxième partie de la période de fonctionnement, le primaire du second transformateur réalise une inductance stockant de l'énergie, et le primaire du premier transformateur transfère une énergie vers le secondaire du premier transformateur.

Selon un mode de réalisation, le circuit convertisseur DC/DC est configuré pour que :

- sur une première partie d'une période de fonctionnement, le primaire du premier transformateur réalise une inductance permettant une commutation douce des interrupteurs et le primaire du second transformateur transfère une énergie vers le secondaire du second transformateur ;
- sur une deuxième partie de la période de fonctionnement, le primaire du second transformateur réalise une inductance permettant une commutation douce des interrupteurs, et le primaire du premier transformateur transfère une énergie vers le secondaire du premier transformateur.

Selon un mode de réalisation, une inductance magnétisante d'au moins un transformateur est configurée de sorte qu'audit rapport cyclique un courant magnétisant circulant dans le transformateur permette une commutation douce des interrupteurs du convertisseur DC/DC isolé.

La sortie du circuit de régulation est connectée à une branche du circuit convertisseur DC/DC isolé comprenant lesdits transformateurs.

Selon un mode de réalisation, les interrupteurs et les primaires du circuit convertisseur DC/DC isolé forment une structure en demi-pont. Alternativement, les interrupteurs et les primaires du circuit convertisseur DC/DC isolé forment une structure en pont complet, ou ont toute autre configuration permettant un fonctionnement du circuit convertisseur DC/DC isolé.

Selon un mode de réalisation, au moins un des interrupteurs comprend une capacité en parallèle.

Selon un mode de réalisation, le rapport cyclique du circuit convertisseur DC/DC isolé est sensiblement égal à 50%.

Selon un mode de réalisation, le contrôle de la tension de sortie du circuit convertisseur DC/DC isolé comprend une première boucle asservissant la consigne d'un paramètre électrique d'un signal du circuit de régulation à une différence entre la valeur de la tension de sortie du circuit convertisseur DC/DC isolé et une consigne de tension de sortie du circuit convertisseur DC/DC isolé, la consigne du paramètre électrique étant telle que le circuit convertisseur DC/DC isolé reçoit une tension ayant une valeur correspondant à une valeur respective de tension de sortie du circuit convertisseur DC/DC isolé.

Selon un mode de réalisation, le procédé comprend la fourniture du circuit convertisseur DC/DC isolé comprenant au moins un premier et un deuxième transformateurs d'isolation en série ; et :

- sur une première partie d'une période de fonctionnement du circuit convertisseur DC/DC isolé, le primaire du premier transformateur réalise une inductance stockant de l'énergie et le primaire du second transformateur transfère une énergie vers le secondaire du second transformateur ;
- sur une deuxième partie de la période de fonctionnement du circuit convertisseur DC/DC isolé, le primaire du second transformateur réalise une inductance stockant de l'énergie, et le primaire du premier transformateur transfère une énergie vers le secondaire du premier transformateur.

Selon un mode de réalisation, le procédé comprend la fourniture du circuit convertisseur DC/DC isolé comprenant au moins un premier et un deuxième transformateurs d'isolation en série ; et :

- sur une première partie d'une période de fonctionnement du circuit convertisseur DC/DC isolé, le primaire du premier transformateur réalise une inductance permettant une commutation douce des interrupteurs et le primaire du second transformateur transfère une énergie vers le secondaire du second transformateur ;
- sur une deuxième partie de la période de fonctionnement du circuit convertisseur DC/DC isolé, le primaire du second transformateur réalise une inductance permettant une commutation douce des interrupteurs, et le primaire du premier transformateur transfère une énergie vers le secondaire du premier transformateur.

Le contrôle de la tension de sortie du circuit convertisseur DC/DC isolé comprend la modification d'une tension délivrée par le circuit de régulation au niveau d'une branche du circuit convertisseur DC/DC isolé comprenant les transformateurs du circuit convertisseur DC/DC isolé.

Selon un mode de réalisation, le procédé comprend la fourniture d'une pluralité de convertisseurs DC/DC isolés entrelacés ; et :

- les circuits convertisseurs DC/DC isolés fonctionnent avec un déphasage de $\pi/n$, n étant le nombre de convertisseurs entrelacés ; et
- le ou les circuits de régulation fonctionnent avec un déphasage de $2\pi/n$.

Selon un mode de réalisation, le contrôle de la tension de sortie des circuits DC/DC isolés est réalisé avec la même consigne délivrée par un seul circuit de régulation.

L'invention concerne aussi un procédé de conversion de tension comprenant les étapes consistant à :

- fournir au moins un circuit convertisseur DC/DC isolé ayant des interrupteurs dont des successions d'ouverture et de fermeture avec au moins un rapport cyclique permettent de transmettre une énergie à travers le convertisseur DC/DC isolé ; au moins un premier transformateur d'isolation ; et un circuit de régulation de la tension d'entrée du circuit convertisseur DC/DC isolé ;
- contrôler la tension de sortie du circuit convertisseur DC/DC isolé en modifiant la tension délivrée au circuit convertisseur DC/DC isolé, le rapport cyclique du circuit convertisseur DC/DC isolé restant constant, la dite étape comprenant la modification d'une tension délivrée par le circuit de régulation au niveau d'une branche du circuit convertisseur DC/DC isolé comprenant le premier transformateur du circuit convertisseur DC/DC isolé.

Le procédé selon cette invention peut comprendre l'une quelconque des étapes décrites précédemment et qui lui sont compatibles.

L'invention sera mieux comprise en faisant référence aux dessins, dans lesquels :

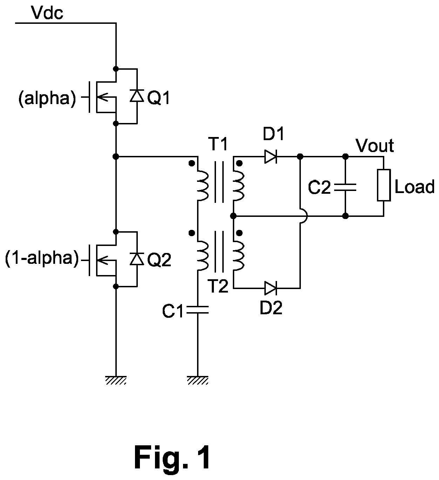

- la figure 1 illustre un exemple de convertisseur de tension DC/DC isolé selon l'art antérieur ;

- les figures 2 à 7 illustrent chacune un exemple de convertisseur de tension DC/DC;

- la figure 8 représente un graphe du gain en fonction du rapport cyclique dans un convertisseur de tension DC/DC isolé

- la figure 9 illustre un exemple de procédé de commande d'un dispositif de conversion comprenant un entrelacement de convertisseurs.

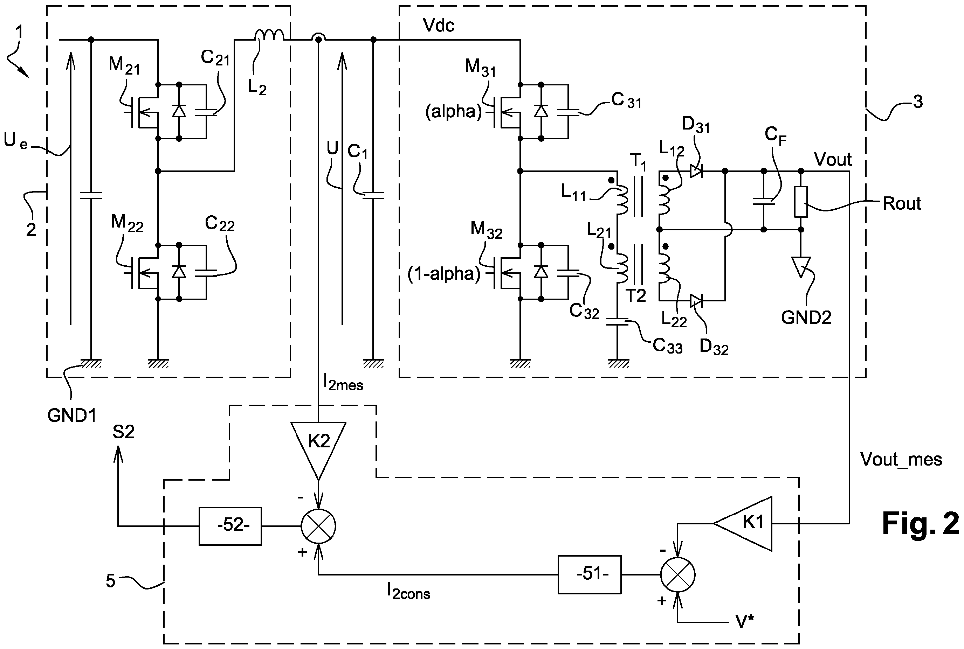

Le convertisseur de tension sera mieux compris en faisant référence à la figure 2.

Le convertisseur 1 comprend un circuit convertisseur DC/DC isolé 3 et un circuit 2 de régulation de la tension d'entrée du circuit convertisseur DC/DC isolé 3. Les circuits 2, 3 comprennent des interrupteurs M21, M22, M31, M32 dont une succession d'ouvertures et de fermetures permettent de contrôler le signal de sortie de ces circuits. Ces interrupteurs peuvent être des transistors, tels que des transistors MOSFET, IGBT, ou autres. Les circuits 2, 3 peuvent être réalisés à partir d'un matériau semiconducteur tel que du silicium (Si), du nitrure de gallium (GaN), du carbure de silicium (SiC), ou tout autre matériau semiconducteur.

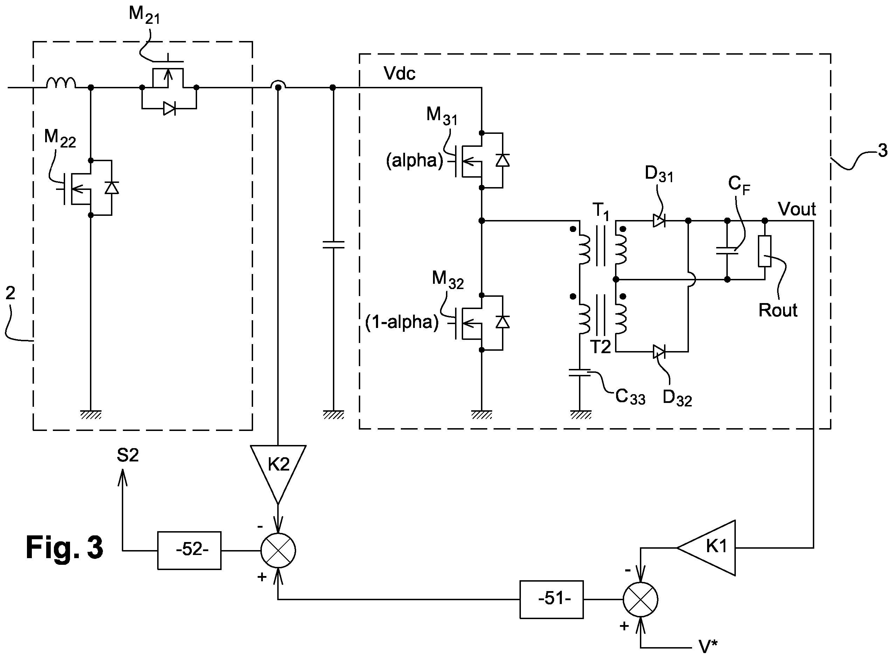

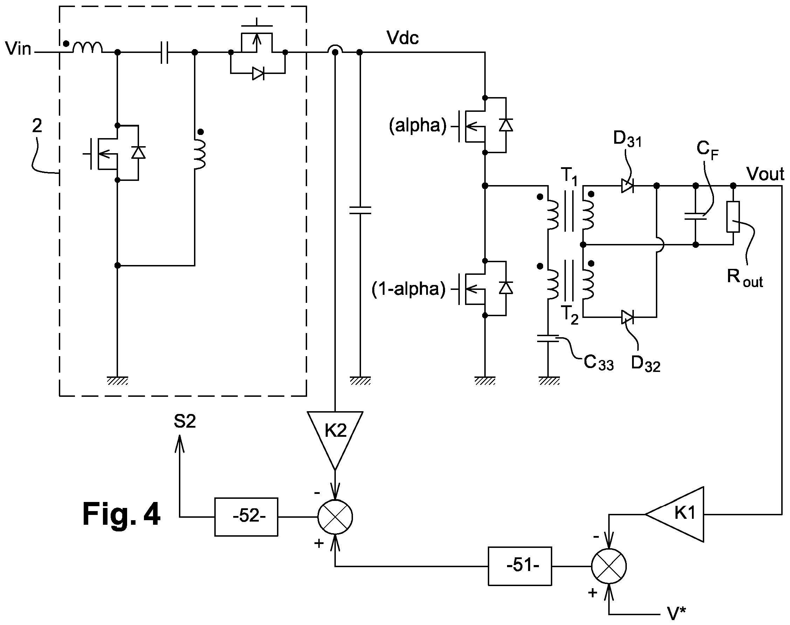

Dans l'exemple considéré, qui ne fait pas partie de l'invention revendiquée, le circuit de régulation 2 est un convertisseur DC/DC abaisseur, cependant il pourrait être d'un autre type de convertisseur DC/DC comme illustré en figures 3 et 4. Le circuit de régulation 2 comprend deux interrupteurs M21, M22 en série. L'interrupteur M21, dit interrupteur côté haut, est connecté à la borne haute d'une source de tension (non représentée). L'interrupteur M22, dit interrupteur côté bas, est connecté à la borne basse de la source de tension. Cette borne basse correspond notamment à une première masse GND1 du convertisseur 1. Chaque interrupteur M21, M22, peut comprendre un transistor en parallèle avec une diode de roue libre.

Chaque interrupteur M21, M22 comprend une capacité C21, C22 en parallèle. Ces capacités C21, C22 servent à faire une commutation à zéro de tension ou ZVS (pour « Zero Voltage Switching » en anglais) lors de l'ouverture des interrupteurs. Pendant l'ouverture d'un interrupteur M21, M22 on récupère l'énergie stockée dans une inductance pour décharger et recharger la capacité C21, C22 qui est aux bornes de l'interrupteur. Une fois que la tension est proche de 0V on vient commander l'interrupteur et ainsi on réalise une commutation sous zéro de tension, ce qui réduit fortement les pertes en commutation.

Une inductance L2 a une première borne connectée au point milieu des deux interrupteurs M21, M22, et une deuxième borne connectée à l'entrée du circuit convertisseur DC/DC isolé 3.

Une capacité C1 est connectée entre la deuxième borne de l'inductance L2 et la première masse GND1 du convertisseur 1. Cette capacité C1 permet par exemple de faire l'interface entre les circuits 2,3.

Le circuit convertisseur DC/DC isolé 3 comprend deux interrupteurs M31, M32 en série, de préférence identiques. Les interrupteurs M31, M32 comprennent des diodes et des capacités C31, C32 similaires aux diodes et aux capacités C21, C22 décrites précédemment pour les interrupteurs M21, M22. Le point milieu entre les deux interrupteurs M31, M32 est connecté à une branche qui comprend deux transformateurs d'isolation T1, T2 en série. Chaque transformateur T1, T2 comprend un primaire L11, L21 et un secondaire L12, L22. Les primaires L11, L21 et les secondaires L12, L22 sont respectivement en série. Le point milieu des interrupteurs M31, M32 est connecté aux primaires L11, L21. Une capacité C33 est comprise entre les transformateurs T1, T2 et la première masse GND1. Les secondaires L12, L22 sont en série avec leur point milieu connecté à une seconde masse GND2 du convertisseur de tension 1.

Des diodes D31, D32 sont connectées aux secondaires L12, L22 pour redresser le signal issu des transformateurs T1, T2. A cet effet, une diode D31 a son anode connectée à une borne d'un secondaire L12 et l'autre diode D32 a son anode connectée à une borne de l'autre secondaire L22, ces bornes étant différentes du point milieu des deux secondaires L12, L22. Les diodes D31, D32 pourraient être avantageusement remplacées par des interrupteurs, notamment des transistors, tels que des transistors MOSFET, IGBT ou autres, afin d'obtenir par exemple un redressement synchrone en sortie des transformateurs T1, T2. Pour des applications à fort courant au secondaire l'usage de MOSFET à la place des diodes permet d'améliorer le rendement global du convertisseur 1.

La sortie du circuit convertisseur DC/DC isolé 3 est prise entre la borne des diodes D31, D32 qui n'est pas connectée aux secondaires L12, L22 et qui est commune aux deux diodes D31, D32 et la seconde masse GND2.

Le convertisseur de tension 1 comprend une capacité CF pour filtrer le signal délivré par le circuit convertisseur DC/DC isolé 3.

Les interrupteurs M31, M32 du circuit convertisseur DC/DC isolé 3 ont un rapport cyclique qui permet de transférer une énergie à travers les transformateurs T1, T2.

Sur une première partie d'une période de fonctionnement, l'interrupteur M31 est fermé et l'interrupteur M32 est ouvert. Le primaire L11 du premier transformateur T1 réalise une inductance permettant une commutation douce des interrupteurs M31, M32 et le primaire L21 du second transformateur T2 transfère une énergie vers le secondaire L22 du second transformateur T2.

Sur une deuxième partie de la période de fonctionnement, le primaire L21 du second transformateur T2 réalise une inductance permettant une commutation douce des interrupteurs M31, M32, et le primaire L11 du premier transformateur T1 transfère une énergie vers le secondaire L12 du premier transformateur T1. Les durées des première et deuxième parties de fonctionnement sont définies par le rapport cyclique $\alpha$ des interrupteurs M31, M32.

Les interrupteurs M31, M32 fonctionnent avec un rapport cyclique $\alpha$ qui ne varie pas, c'est-à-dire qui reste constant au cours du temps. Lors du fonctionnement du convertisseur 1, la tension de sortie Vout du circuit convertisseur DC/DC isolé 3 est contrôlée par la tension délivrée par le circuit de régulation 2, c'est-à-dire en entrée du circuit convertisseur DC/DC isolé 3. A cet effet, le convertisseur 1 comprend une unité de commande 5 du circuit de régulation 2. L'unité de commande 5 délivre un signal S2 de modulation en largeur d'impulsion ou PWM (pour « puise width modulation » en anglais) qui commande l'ouverture et la fermeture des interrupteurs M21, M22 du circuit de régulation 2 pour contrôler le signal électrique délivré par le circuit de régulation 2. Les interrupteurs M21, M22 sont commandés de sorte que la tension délivrée en entrée du circuit convertisseur DC/DC isolé 3, c'est-à-dire en sortie du circuit de régulation 2, permette d'obtenir une valeur de tension souhaitée en sortie du circuit convertisseur DC/DC isolé 3. Ainsi, contrairement à l'art antérieur, il n'est pas nécessaire de faire varier le rapport cyclique $\alpha$ du circuit convertisseur DC/DC isolé 3. Le circuit convertisseur DC/DC isolé 3 peut donc fonctionner à son rapport cyclique le plus avantageux, notamment à 50%.

Les stress en tension aux bornes des diodes D31, D32 sont fonction du rapport cyclique a, et sont donnés par les expressions suivantes :

$$V(D31) = Vout/(1 - \alpha) \text{ et } V(D32) = Vout/\alpha$$

et

$$V(D31) = Vout/(1 - \alpha) \text{ et } V(D32) = Vout/\alpha$$

Le rapport cyclique $\alpha$ est de préférence égal à 50%. Ainsi, les stress en tension aux bornes de deux diodes D31, D32 sont égaux, l'usure est la même entre les diodes. En outre, à un rapport cyclique de 50%, les ondulations de courant dues aux inductances magnétisantes des transformateurs T1,T2 sont compensées entre elles. Ainsi, le courant aux secondaires L12, L22 est continu.

Plus particulièrement, les inductances magnétisantes des transformateurs T1, T2 sont telles qu'au rapport cyclique constant, égal notamment à 50%, un courant magnétisant circulant dans les transformateurs T1, T2 permette une commutation douce des interrupteurs M31, M32 du convertisseur DC/DC isolé 3.

En particulier, lorsque la tension d'entrée Ue du convertisseur de tension 1 varie, le circuit de régulation 2 permet de s'assurer que la tension U en entrée du circuit convertisseur DC/DC isolé 3 garde une valeur qui permet d'obtenir la tension de sortie Vout désirée. Ainsi, si la tension d'entrée Ue du convertisseur 1 change de valeur, l'unité de commande 5 modifie de façon correspondante la commande des rapports cycliques des interrupteurs M21, M22 pour maintenir la tension U en sortie du circuit de régulation 2, c'est-à-dire en entrée du convertisseur DC/DC isolé 3. Ceci est particulièrement avantageux dans un véhicule électrique où le niveau de charge d'une batterie peut varier au cours du temps.

Plus particulièrement, l'unité de commande 5 réalise une première boucle d'asservissement du courant délivré par le circuit de régulation 2 à une différence entre la valeur Vout_mes de la tension de sortie du circuit convertisseur DC/DC isolé 3 et une tension Vout souhaitée en sortie du circuit convertisseur DC/DC isolé 3. A cet effet, l'unité de commande 5 reçoit la tension Vout_mes mesurée en sortie du circuit convertisseur DC/DC isolé 3, éventuellement multipliée par un gain K1. L'unité de commande 5 compare ensuite une consigne de tension V* avec la tension Vout mes mesurée. La consigne de tension V* correspond à la tension Vout souhaitée en sortie du circuit convertisseur DC/DC isolé 3. En fonction du résultat de la comparaison, un contrôleur 51 délivre une consigne de courant I2cons au circuit de régulation 2 de façon à obtenir une tension U attendue en sortie du circuit de régulation 2, c'est-à-dire en entrée du circuit convertisseur DC/DC isolé 3. La consigne de courant I2cons est telle que le circuit de régulation 2 délivre au circuit convertisseur DC/DC isolé 3 la valeur de tension d'entrée U correspondant à la valeur de tension Vout respective attendue en sortie du circuit convertisseur DC/DC isolé 3.

La première boucle d'asservissement pourrait être réalisée par tout autre moyen. Par exemple, la première boucle pourrait asservir directement la tension U délivrée par le circuit de régulation 2.

L'unité de commande 5 peut assurer en outre une protection du circuit convertisseur DC/DC isolé 3. Par exemple, en cas de court-circuit au niveau de la charge de sortie Rout, l'unité de commande 5 peut protéger le circuit convertisseur DC/DC isolé 3 en agissant sur les commandes S2 du circuit de régulation 2 de manière à annuler la tension en entrée du circuit convertisseur DC/DC isolé 3 afin de le protéger.

La consigne de courant I2cons peut être transmise directement à un contrôleur 52 qui délivre au circuit de régulation 2 le signal PWM S2 à partir de la consigne de courant I2cons. Cependant, l'unité de commande 5 peut réaliser une deuxième boucle qui asservit le courant délivré par le circuit de régulation 2 à une différence entre la valeur I2mes du courant délivré par le circuit de régulation 2 et la consigne de courant I2cons. En particulier, l'unité de commande 5 compare la consigne de courant I2cons issue de la première boucle avec le courant I2mes mesuré en sortie du circuit de régulation 2. Le courant I2 cons est éventuellement multiplié par un gain K2 avant la comparaison. En fonction du résultat de cette comparaison, le contrôleur 52 détermine le signal S2 de commande du rapport cyclique des interrupteurs M21, M22 du circuit de régulation 2, de façon à ajuster le courant délivré par le circuit de régulation 2 pour obtenir le courant I2cons attendu ; et ainsi obtenir un signal ayant la tension U attendue en sortie du circuit de régulation 2, c'est-à-dire en entrée du circuit convertisseur DC/DC isolé 3. La deuxième boucle d'asservissement pourrait être réalisée par tout autre moyen permettant d'obtenir, en sortie du circuit de régulation 2, la tension U afin d'atteindre la tension Vout en sortie du circuit convertisseur DC/DC isolé 3. En particulier, une boucle de tension pourrait être utilisée. Cependant, la boucle de courant est plus facile à mettre en œuvre car, en petit signal, la boucle de courant permet d'avoir une fonction de transfert du premier ordre alors que la boucle de tension est du deuxième ordre. En outre, le convertisseur de tension 1 pourrait mettre en œuvre la première boucle sans utiliser la deuxième boucle.

Le convertisseur 1 selon l'exemple peut être conçu pour couvrir une gamme de fonctionnement. La gamme de fonctionnement correspond à une tension d'entrée Ue du convertisseur 1 comprise entre une valeur minimale $Ue_{min1}$ et une valeur maximale $Ue_{max1}$ ; et à une tension de sortie Vout comprise entre une valeur minimale $Vout_{min1}$ et une valeur maximale $Vout_{max1}$. Par exemple, la tension d'entrée Ue est comprise entre 170 et 450V ; et la tension cible Vout en sortie du circuit convertisseur DC/DC isolé est comprise entre 12 et 16V. Par exemple, la valeur minimale $Vout_{min1}$ de la tension de sortie est comprise entre 8 et 14V et la valeur maximale $Vout_{max1}$ de la tension de sortie est comprise entre 15 et 16V.

Dans l'exemple de la figure 2, le circuit de régulation 2 est un convertisseur abaisseur. Le convertisseur 1, en particulier le circuit de régulation 2, est alors configuré pour pouvoir délivrer la tension de sortie maximale $Vout_{max1}$ avec la tension minimale $Ue_{min1}$.

Les exemples de convertisseurs illustrés en figures 3 et 4 sont similaires à l'exemple de la figure 2 mais diffèrent par le circuit de régulation 2.

La figure 3 illustre un exemple de convertisseur dans lequel le circuit de régulation 2 est un circuit élévateur connu en soi. Le convertisseur 1, en particulier le circuit de régulation 2, est alors configuré pour pouvoir délivrer la tension de sortie minimale $Vout_{min1}$ avec la tension d'entrée maximale $Ue_{max1}$.

La figure 4 illustre un autre exemple de convertisseur dans lequel le circuit de régulation 2 est un circuit élévateur-abaisseur connu en soi. Dans cet exemple, le circuit de régulation 2 peut abaisser ou élever la tension, ce qui facilite l'utilisation du circuit de régulation 2.

Dans les exemples illustrés en figures 2 à 4, la sortie du circuit de régulation 2 est connectée au circuit convertisseur DC/DC isolé 3 au niveau de la branche du circuit convertisseur DC/DC isolé 3 qui comprend les interrupteurs M31, M32.

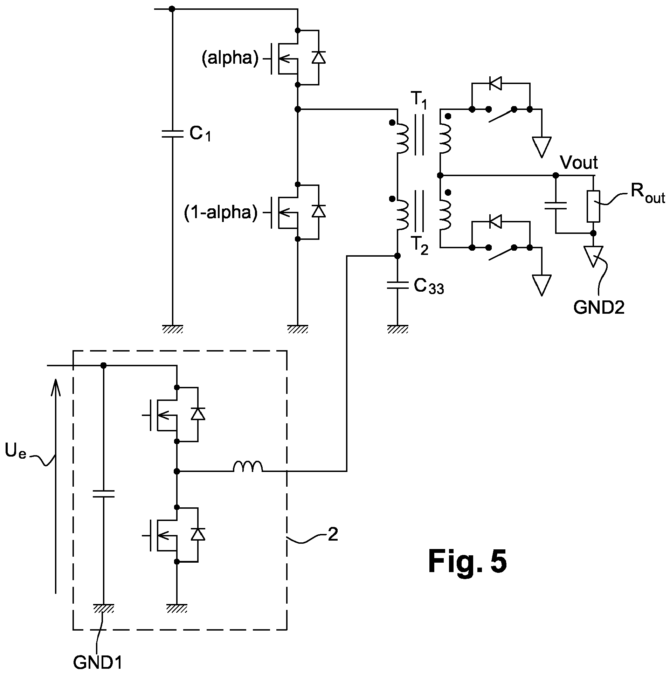

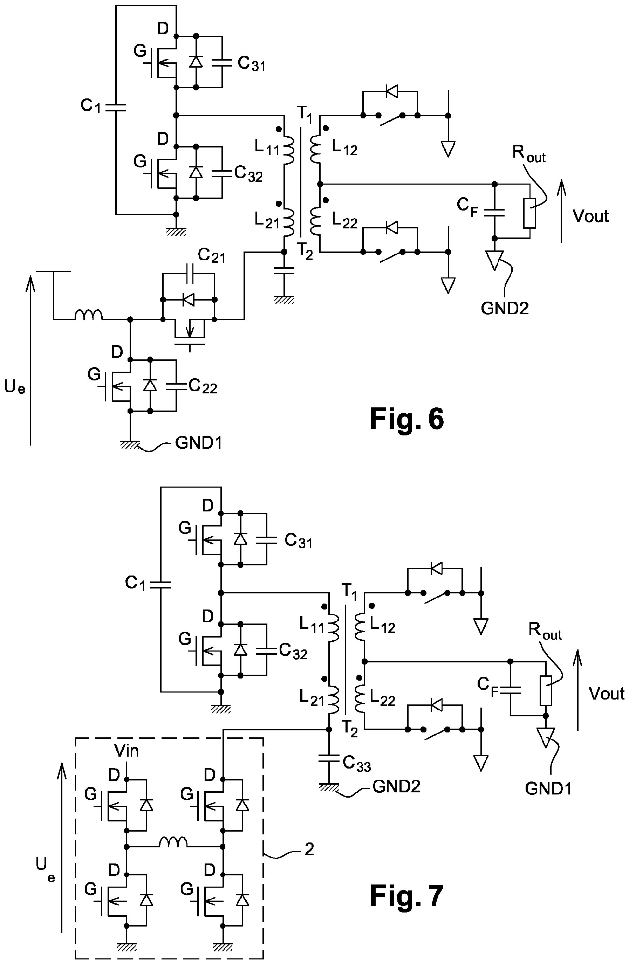

Les exemples de l'invention illustrés en figures 5 à 7, sont identiques aux exemples des figures 2 à 4 si ce n'est que, dans les figures 5 à 6, la sortie du circuit de régulation 2 est connectée à la branche du circuit convertisseur DC/DC isolé 3 qui comprend les transformateurs T1, T2. En particulier, le circuit de régulation 2 est connecté entre les transformateurs T1, T2 et la capacité C33.

En outre, les diodes D31, D32 sont remplacées par des interrupteurs ; et la sortie haute est connectée au point milieu des secondaires L12, L22, alors que dans les exemples précédents, la sortie haute est connectée à la borne commune des diodes D31, D32. Cependant, les exemples illustrés en figures 5 à 7 pourraient être identiques aux exemples des figures 2 à 4 en ce qui concerne ces caractéristiques.

Les exemples de convertisseurs 1 peuvent être configurés pour fonctionner, sur une première gamme de fonctionnement du convertisseur 1, avec un rapport cyclique du circuit convertisseur DC/DC isolé 3 qui est constant et, sur une deuxième gamme de fonctionnement du convertisseur 1, avec un rapport cyclique qui est variable. Ceci est particulièrement avantageux pour obtenir une plage de tension d'entrée Ue et/ou une plage de tension de sortie Vout qui sont plus grandes par rapport à un fonctionnement dans lequel le rapport cyclique du circuit convertisseur DC/DC isolé est toujours constant.

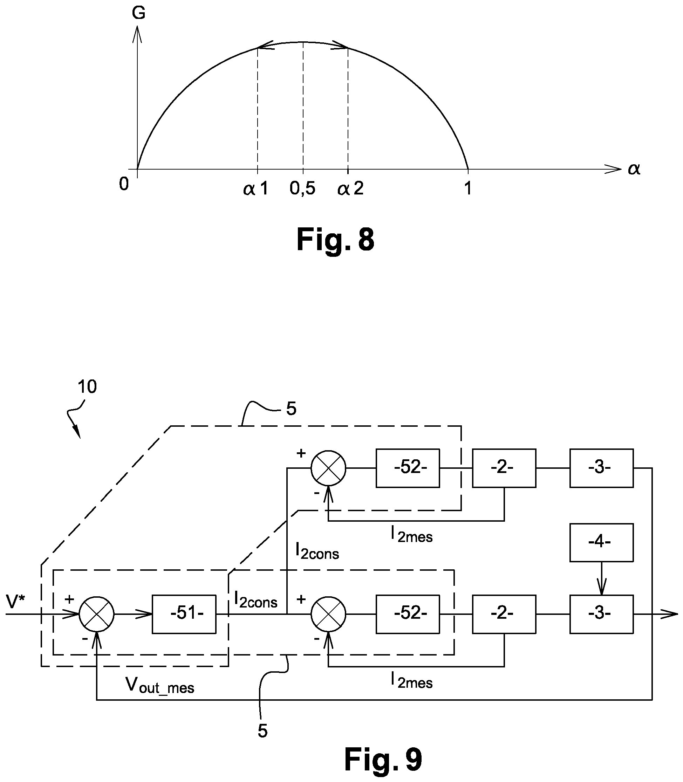

En figure 8, un graphe représente le gain G du circuit convertisseur DC/DC isolé 3 du convertisseur 1 illustré en figure 3, en fonction du rapport cyclique $\alpha$ du circuit convertisseur DC/DC isolé 3. Le gain G correspond au rapport entre la tension Vout en sortie du circuit convertisseur DC/DC isolé 3 sur la tension U en entrée du circuit convertisseur DC/DC isolé 3. La relation entre le gain G et le rapport cyclique $\alpha$ est définie par :

$$G = \frac{Vout}{m \times U} = \alpha \times (1 - \alpha),$$

avec m le rapport de transformation d'un transformateur T1, T2.

Par exemple, le circuit convertisseur DC/DC isolé 3 fonctionne avec un rapport cyclique constant égal à 0,5. La gamme de fonctionnement définie précédemment correspond à la première gamme de fonctionnement. Si l'on souhaite atteindre des valeurs hors de la première gamme de fonctionnement, le rapport cyclique $\alpha$ du circuit convertisseur DC/DC isolé 3 peut être modifié pour atteindre la valeur souhaitée. Ainsi, le convertisseur 1 a une gamme de fonctionnement totale qui est élargie par rapport aux modes de réalisations décrits précédemment.

Par exemple, dans la première gamme de fonctionnement, la tension d'entrée Ue est comprise entre 170 et 450V ; et la tension cible Vout en sortie du circuit convertisseur DC/DC isolé 3 est comprise entre 12 et 16V. La deuxième gamme de fonctionnement est définie par un seuil inférieur $Ue_{min2}$ de tension d'entrée égal à 450V et par un seuil supérieur $Vout_{max2}$ de tension de sortie égal à 12V. Si, lorsque la tension d'entrée est égale à 450V, l'on souhaite atteindre une valeur cible de tension de sortie inférieure à 12V, par exemple 9V, la valeur cible ne peut être atteinte en modifiant le rapport cyclique du circuit de régulation 2 car le circuit 2 est un convertisseur élévateur qui ne peut qu'élever la tension d'entrée Ue. Par contre, en modifiant le rapport cyclique $\alpha$ du circuit convertisseur DC/DC isolé, le gain du circuit convertisseur DC/DC isolé diminue, ce qui permet de diminuer la tension de sortie Vout du circuit convertisseur DC/DC isolé, et permet donc d'atteindre la valeur cible, par exemple 9V. A cet effet, le rapport cyclique α du circuit convertisseur DC/DC isolé 3 peut être diminué à une valeur inférieure al inférieure à 0,5 ou à une valeur α2 supérieure à 0,5.

Pour des applications de puissance, il est avantageux d'entrelacer plusieurs des convertisseurs 1 illustrés en figures 2 à 7. On peut mettre des convertisseurs 1 en parallèle et les entrelacer afin de limiter les ondulations de courant en sortie et réduire la valeur de la capacité de filtrage CF en sortie du circuit convertisseur DC/DC isolé 3. Dans chaque convertisseur 1, grâce au circuit de régulation 2, le rapport cyclique α du circuit convertisseur DC/DC isolé 3 reste constant. Ou, dans chaque convertisseur 1, le rapport cyclique α du circuit convertisseur DC/DC isolé 3 reste constant sur une première partie de la gamme de fonctionnement et varie sur une deuxième partie de la gamme de fonctionnement comme décrit précédemment.

La figure 9 illustre un fonctionnement d'un dispositif de conversion 10 qui comprend un entrelacement de convertisseurs 1. De préférence, la première boucle d'asservissement est commune à tous les convertisseurs 1. Ainsi, les circuits de régulation 2 reçoivent la même consigne de courant I2cons. A cet effet, le dispositif 10 peut comprendre un seul contrôleur 51 délivrant une seule consigne de courant I2cons à tous les circuits de régulation 2. Ainsi, un équilibrage en courant entre les convertisseurs de tension 1 est assuré.

De préférence, les convertisseurs 1 fonctionnent avec un déphasage. En particulier, les circuits de régulation 2 fonctionnent avec un déphasage de $2\pi/n$, où n est le nombre de convertisseurs 1 entrelacés, qui permet de limiter les fluctuations en sortie du dispositif 10 et les problèmes de compatibilité électromagnétique. Les circuits convertisseurs DC/DC isolés 3 fonctionnent avec un déphasage de $\pi/n$ qui permet de limiter les ondulations en sortie du dispositif 10.

L'invention n'est pas limitée aux exemples décrits. En particulier, les boucles de tension peuvent être remplacées par des boucles de courant, inversement les boucles de courant peuvent être remplacées par des boucles de tension. En outre, le circuit convertisseur DC/DC isolé 3 a été décrit avec une structure en demi-pont. Cependant, le circuit convertisseur DC/DC isolé 3 pourrait avoir une structure en pont complet, ou toute autre structure permettant la réalisation de la fonction de convertisseur DC/DC isolé.

D'autres exemples de convertisseurs DC/DC isolé sont similaires à ceux décrits précédemment si ce n'est la différence suivante. Sur la première partie de la période de fonctionnement, le primaire L11 du premier transformateur T1 réalise une inductance stockant de l'énergie et le primaire L21 du second transformateur T2 transfère une énergie vers le secondaire L22 du second transformateur T2. Sur la deuxième partie de la période de fonctionnement, le primaire L21 du second transformateur T2 réalise une inductance stockant de l'énergie, et le primaire L11 du premier transformateur T1 transfère une énergie vers le secondaire L12 du premier transformateur T1. Dans ces exemples de convertisseur DC/DC isolés, un courant magnétisant circulant dans les transformateurs T1, T2 ne permet pas nécessairement une commutation douce des interrupteurs M31, M32 du convertisseur DC/DC isolé.

**Revendications**

1.  Convertisseur de tension (1) comprenant :

    - un circuit convertisseur DC/DC isolé (3) ayant au moins un premier transformateur d'isolation (T1) et des interrupteurs (M31, M32) dont des successions d'ouverture et de fermeture avec au moins un rapport cyclique (a) permettent de transmettre une énergie à travers le convertisseur DC/DC isolé (3) par l'intermédiaire dudit premier transformateur (T1) ;
    - un circuit de régulation (2) et
    une capacité (C33) configurée pour être connectée à une première masse (GND1) ;
    le circuit de régulation (2) étant configuré pour contrôler la tension de sortie (Vout) du circuit convertisseur DC/DC isolé (3) en modifiant une tension délivrée au circuit convertisseur DC/DC isolé (3), le rapport cyclique (a) du circuit convertisseur DC/DC isolé (3) restant constant, et dans ledit convertisseur (1), la sortie du circuit de régulation est connectée à une branche du circuit convertisseur DC/DC isolé comprenant ledit premier transformateur (T1)
    **caractérisé en ce que** :
    la branche du au moins un premier transformateur (T1) est connectée à un point milieu des interrupteurs (M31,M32), et ledit circuit de régulation (2) et ladite capacité (C33) sont connectés à ladite branche du premier transformateur à un point différent du point de connexion de la branche avec le point milieu des interrupteurs (M31,M32).

2.  Convertisseur (1) selon la revendication 1, dans lequel le circuit convertisseur DC/DC isolé (3) est configuré de sorte que son rapport cyclique (a) est sensiblement égal à 50%.

3.  Convertisseur (1) selon l'une des revendications précédentes, comprenant un circuit (5) destiné à implémenter une première boucle de façon à asservir une consigne (I2cons) d'un paramètre électrique d'un signal du circuit de régulation (2) à une différence entre la valeur (Vout_mes) de la tension de sortie du circuit convertisseur DC/DC isolé (3) et une consigne (V*) de tension de sortie du circuit convertisseur DC/DC isolé (3), la consigne (I2cons) du paramètre électrique étant telle que le circuit de régulation (2) délivre au circuit convertisseur DC/DC isolé (3) une valeur de tension correspondant à une valeur respective de tension de sortie du circuit convertisseur DC/DC isolé (3).

4. Convertisseur (1) selon l'une des revendications précédentes, dans lequel le circuit convertisseur DC/DC isolé (1) comprend au moins le premier transformateur d'isolation (T1) et un deuxième transformateur d'isolation (T2) en série avec le premier transformateur, les interrupteurs (M31,M32) permettant de transmettre une énergie à travers le convertisseur DC/DC isolé (3) par l'intermédiaire desdits transformateurs (T1,T2), et la sortie du circuit de régulation (2) étant connectée à la branche du circuit convertisseur DC/DC isolé (3) comprenant lesdits transformateurs (T1,T2).

5. Convertisseur selon la revendication précédente, dans lequel le circuit convertisseur DC/DC isolé (3) est configuré pour que :

   - sur une première partie d'une période de fonctionnement, le primaire (L11) du premier transformateur (T1) réalise une inductance stockant de l'énergie et le primaire (L21) du second transformateur (T2) transfère une énergie vers le secondaire (L22) du second transformateur (T2) ;
   - sur une deuxième partie de la période de fonctionnement, le primaire (L21) du second transformateur (T2) réalise une inductance stockant de l'énergie, et le primaire (L11) du premier transformateur (T1) transfère une énergie vers le secondaire (L12) du premier transformateur (T1).

6. Convertisseur (1) selon les revendications 4 ou 5, dans lequel une inductance magnétisante d'au moins un des transformateurs (T1, T2) est configurée de sorte qu'audit rapport cyclique (a) un courant magnétisant circulant dans le transformateur (T1, T2) permette une commutation douce des interrupteurs (M31, M32) du convertisseur DC/DC isolé (3).

7. Dispositif (10) de conversion de tension comprenant au moins deux convertisseurs de tension (1) selon l'une des revendications précédentes, les deux convertisseurs (1) étant entrelacés ; et dans lequel les circuits de régulation (2) sont configurés pour fonctionner avec un déphasage de $2\pi/n$, et les circuits convertisseurs DC/DC isolé (3) sont configurés pour fonctionner avec un déphasage de $\pi/n$, n étant le nombre de convertisseurs de tension (1) entrelacés.

8. Dispositif (10) selon la revendication 7 comprenant des convertisseurs (1) selon la revendication 3, dans lequel les convertisseurs de tension (1) partagent un seul circuit (5) destiné à implémenter la première boucle, de sorte que les circuits de régulation (2) reçoivent la même consigne (I2cons).

9. Procédé de conversion de tension comprenant les étapes consistant à :

   - fournir un convertisseur (1) selon la revendication 1 ;
   - contrôler la tension de sortie (Vout) du circuit convertisseur DC/DC isolé (3) en modifiant la tension délivrée au convertisseur DC/DC isolé (3), le rapport cyclique (a) du circuit convertisseur DC/DC isolé (3) restant constant, la dite étape comprenant la modification d'une tension délivrée par le circuit de régulation (2).

10. Procédé selon la revendication 9, dans lequel le rapport cyclique (a) du circuit convertisseur DC/DC isolé (3) est sensiblement égal à 50%.

11. Procédé selon les revendications 9 ou 10, dans lequel le contrôle de la tension de sortie du circuit convertisseur DC/DC isolé (3) comprend une première boucle asservissant la consigne (I2cons) d'un paramètre électrique d'un signal du circuit de régulation (2) à une différence entre la valeur (Vout_mes) de la tension de sortie du circuit convertisseur DC/DC isolé (3) et une consigne (V*) de tension de sortie du circuit convertisseur DC/DC isolé (3), la consigne (I2cons) du paramètre électrique étant telle que le circuit convertisseur DC/DC isolé (3) reçoit une tension ayant une valeur correspondant à une valeur respective de tension de sortie du circuit convertisseur DC/DC isolé (3).

12. Procédé selon l'une des revendications 9 à 11 comprenant la fourniture du circuit convertisseur DC/DC isolé (3) comprenant au moins le premier et un deuxième transformateurs d'isolation (T1, T2) en série ; et dans lequel :

   - sur une première partie d'une période de fonctionnement du circuit convertisseur DC/DC isolé (3), le primaire (L11) du premier transformateur (T1) réalise une inductance stockant de l'énergie et le primaire (L21) du second transformateur (T2) transfère une énergie vers le secondaire (L22) du second transformateur (T2) ;
   - sur une deuxième partie de la période de fonctionnement du circuit convertisseur DC/DC isolé (3), le primaire (L21) du second transformateur (T2) réalise une inductance stockant de l'énergie, et le primaire (L11) du premier transformateur (T1) transfère une énergie vers le secondaire (L12) du premier transformateur (T1).

13. Procédé selon l'une des revendications 9 à 12 comprenant la fourniture d'une pluralité de convertisseurs DC/DC isolés (3) entrelacés ; et dans lequel :

- les circuits convertisseurs DC/DC isolés (3) fonctionnent avec un déphasage de $\pi/n$, n étant le nombre de convertisseurs entrelacés ; et
- le ou les circuits de régulation (2) fonctionnent avec un déphasage de $2\pi/n$.

14. Procédé selon les revendications 11 et 13, dans lequel le contrôle de la tension de sortie (Vout) des circuits DC/DC isolés est réalisé avec la même consigne (I2cons) délivrée par un seul circuit de régulation (2).


**Patentansprüche**

1. Spannungswandler (1), umfassend:

- eine isolierte Gleichstromwandlerschaltung (3) mit mindestens einem ersten Isolationstransformator (T1) und Schaltern (M31, M32), deren Öffnungs- und Schließabfolgen mit mindestens einem zyklischen Verhältnis ($\alpha$) erlauben, eine Energie durch den isolierten Gleichstromwandler (3) über den ersten Transformator (T1) zu übertragen;
- eine Regelschaltung (2) und eine Kapazität (C33), die ausgelegt ist, um an eine erste Masse (GND1) angeschlossen zu sein;
wobei die Regelschaltung (2) ausgelegt ist, um die Ausgangsspannung (Vout) der isolierten Gleichstromwandlerschaltung (3) durch Ändern einer an die isolierte Gleichstromwandlerschaltung (3) gelieferten Spannung zu steuern, wobei das zyklische Verhältnis ($\alpha$) der isolierten Gleichstromwandlerschaltung (3) konstant bleibt, und
im Wandler (1) der Ausgang der Regelschaltung an eine Abzweigung der isolierten Gleichstromwandlerschaltung angeschlossen ist, die den ersten Transformator (T1) umfasst, **dadurch gekennzeichnet, dass**:
die Abzweigung des mindestens einen ersten Transformators (T1) an einen Mittelanschluss der Schalter (M31, M32) angeschlossen ist, und die Regelschaltung (2) und die Kapazität (C33) an die Abzweigung des ersten Transformators an einem Anschluss angeschlossen sind, der sich von dem Verbindungsanschluss der Abzweigung mit dem Mittelanschluss der Schalter (M31, M32) unterscheidet.

2. Wandler (1) nach Anspruch 1, wobei die isolierte Gleichstromwandlerschaltung (3) derart ausgelegt ist, dass ihr zyklisches Verhältnis ($\alpha$) etwa gleich 50 % beträgt.

3. Wandler (1) nach einem der vorangehenden Ansprüche, umfassend eine Schaltung (5), die zur Implementierung einer ersten Schleife derart bestimmt ist, dass ein Sollwert (I2cons) eines elektrischen Parameters eines Signals der Regelschaltung (2) mit einer Differenz zwischen dem Wert (Vout_mes) der Ausgangsspannung der isolierten Gleichstromwandlerschaltung (3) und einem Ausgangsspannungssollwert (V*) der isolierten Gleichstromwandlerschaltung (3) angesteuert wird, wobei der Sollwert (I2cons) des elektrischen Parameters derart ist, dass die Regelschaltung (2) der isolierten Gleichstromwandlerschaltung (3) einen Spannungswert liefert, der einem jeweiligen Ausgangsspannungswert der isolierten Gleichstromwandlerschaltung (3) entspricht.

4. Wandler (1) nach einem der vorangehenden Ansprüche, wobei die isolierte Gleichstromwandlerschaltung (1) mindestens den ersten Isolationstransformator (T1) und einen zweiten Isolationstransformator (T2) in Reihe mit dem ersten Transformator umfasst, wobei die Schalter (M31, M32) erlauben, eine Energie durch den isolierten Gleichstromwandler (3) über die Transformatoren (T1, T2) zu übertragen, und der Ausgang der Regelschaltung (2) an die Abzweigung der isolierten Gleichstromwandlerschaltung (3), die die Transformatoren (T1, T2) umfasst, angeschlossen ist.

5. Wandler nach vorangehendem Anspruch, wobei die isolierte Gleichstromwandlerschaltung (3) ausgelegt ist, damit:

- über einen ersten Teil einer Betriebsperiode die Primärwicklung (L11) des ersten Transformators (T1) eine Induktivität durchführt, die Energie speichert, und die Primärwicklung (L21) des zweiten Transformators (T2) eine Energie an die Sekundärwicklung (L22) des zweiten Transformators (T2) überträgt;
- über einen zweiten Teil der Betriebsperiode die Primärwicklung (L21) des zweiten Transformators (T2) eine Induktivität durchführt, die Energie speichert, und die Primärwicklung (L11) des ersten Transformators (T1) eine Energie an die Sekundärwicklung (L12) des ersten Transformators (T1) überträgt.

6. Wandler (1) nach den Ansprüchen 4 oder 5, wobei eine magnetisierende Induktivität von mindestens einem der Transformatoren (T1, T2) derart ausgelegt ist, dass bei dem zyklischen Verhältnis ($\alpha$) ein in dem Transformator (T1, T2) fließender magnetisierender Strom eine sanfte Umschaltung der Schalter (M31, M32) des isolierten Gleichstromwandlers (3) erlaubt.

**7.** Spannungswandlervorrichtung (10), umfassend mindestens zwei Spannungswandler (1) nach einem der vorangehenden Ansprüche, wobei die zwei Wandler (1) verschachtelt sind; und wobei die Regelschaltungen (2) ausgelegt sind, um mit einer Phasenverschiebung von $2\pi/n$ zu arbeiten, und die isolierten Gleichstromwandlerschaltungen (3) ausgelegt sind, um mit einer Phasenverschiebung von $\pi/n$ zu arbeiten, wobei n die Anzahl verschachtelter Spannungswandler (1) ist.

**8.** Vorrichtung (10) nach Anspruch 7, umfassend Wandler (1) nach Anspruch 3, wobei die Spannungswandler (1) eine einzige Schaltung (5) teilen, die zur Implementierung der ersten Schleife derart bestimmt ist, dass die Regelschaltungen (2) den gleichen Sollwert (I2cons) erhalten.

**9.** Spannungswandlungsverfahren, umfassend die Schritte, die darin bestehen:

- Bereitstellen eines Wandlers nach Anspruch 1;
- Steuern der Ausgangsspannung (Vout) der isolierten Gleichstromwandlerschaltung (3) durch Ändern der dem isolierten Gleichstromwandler (3) gelieferten Spannung, wobei das zyklische Verhältnis ($\alpha$) der isolierten Gleichstromwandlerschaltung (3) konstant bleibt, wobei der Schritt die Änderung einer von der Regelschaltung (2) gelieferten Spannung umfasst.

**10.** Verfahren nach Anspruch 9, wobei das zyklische Verhältnis ($\alpha$) der isolierten Gleichstromwandlerschaltung (3) etwa gleich 50 % beträgt.

**11.** Verfahren nach den Ansprüchen 9 oder 10, wobei die Steuerung der Ausgangsspannung der isolierten Gleichstromwandlerschaltung (3) eine erste Schleife umfasst, die den Sollwert (I2cons) eines elektrischen Parameters eines Signals der Regelschaltung (2) mit einer Differenz zwischen dem Wert (Vout_mes) der Ausgangsspannung der isolierten Gleichstromwandlerschaltung (3) und einem Ausgangsspannungssollwert (V*) der isolierten Gleichstromwandlerschaltung (3) ansteuert, wobei der Sollwert (I2cons) des elektrischen Parameters derart ist, dass die isolierte Gleichstromwandlerschaltung (3) ein Spannung erhält, die einen Wert hat, der einem jeweiligen Ausgangsspannungswert der isolierten Gleichstromwandlerschaltung (3) entspricht.

**12.** Verfahren nach einem der Ansprüche 9 bis 11, umfassend die Bereitstellung der isolierten Gleichstromwandlerschaltung (3), die mindestens den ersten und einen zweiten Isolationstransformator (T1, T2) in Reihe umfasst; und wobei:

- über einen ersten Teil einer Betriebsperiode der isolierten Gleichstromwandlerschaltung (3) die Primärwicklung (L11) des ersten Transformators (T1) eine Induktivität durchführt, die Energie speichert, und die Primärwicklung (L21) des zweiten Transformators (T2) eine Energie an die Sekundärwicklung (L22) des zweiten Transformators (T2) überträgt;
- über einen zweiten Teil der Betriebsperiode der isolierten Gleichstromwandlerschaltung (3) die Primärwicklung (L21) des zweiten Transformators (T2) eine Induktivität durchführt, die Energie speichert, und die Primärwicklung (L11) des ersten Transformators (T1) eine Energie an die Sekundärwicklung (L12) des ersten Transformators (T1) überträgt.

**13.** Verfahren nach einem der Ansprüche 9 bis 12, umfassend die Bereitstellung einer Vielzahl verschachtelter isolierter Gleichstromwandler (3); und wobei:

- die isolierten Gleichstromwandlerschaltungen (3) mit einer Phasenverschiebung von $\pi/n$ arbeiten, wobei n die Anzahl verschachtelter Wandler ist; und
- die Regelschaltung(en) (2) mit einer Phasenverschiebung von $2\pi/n$ arbeiten.

**14.** Verfahren nach den Ansprüchen 11 und 13, wobei die Steuerung der Ausgangsspannung (Vout) der isolierten Gleichstromschaltungen mit demselben Sollwert (I2cons) durchgeführt wird, die von einer einzigen Regelschaltung (2) geliefert wird.

**Claims**

**1.** Voltage converter (1) comprising:

- an isolated DC/DC converter circuit (3) having at least one first isolation transformer (T1) and switches (M31, M32) whose opening and closing successions with at least one duty ratio (a) make it possible to transmit energy through the isolated DC/DC converter circuit (3) by way of said first transformer (T1);
- a circuit (2) for regulating and a capacitor (C33) configured to be connected to a first ground (GND1);

the regulating circuit (2) being configured to control the output voltage (Vout) of the isolated DC/DC converter circuit (3) by modifying a voltage delivered to the isolated DC/DC converter circuit (3), the duty ratio (a) of the isolated DC/DC converter circuit (3) remaining constant, and

in said converter (1), the output of the regulating circuit is connected to a branch of the isolated DC/DC converter circuit comprising said first transformer (T1) **characterized in that**:

the branch of the at least one first transformer (T1) is connected to a midpoint of the switches (M31 ,M32), and said regulating circuit (2) and said capacitor (C33) are connected to said branch of the first transformer at a point different from the connection point between the branch and the midpoint of the switches (M31,M32).

2. Converter (1) according to Claim 1, in which the isolated DC/DC converter circuit (3) is configured so that its duty ratio (a) is substantially equal to 50%.

3. Converter (1) according to any one of the preceding Claims, comprising a circuit (5) used for implementing a first loop so as to lock in a setpoint (I2cons) of an electrical parameter of a signal of the regulating circuit (2) based on a difference between the value (Vout_mes) of the output voltage of the isolated DC/DC converter circuit (3) and an output voltage setpoint (V*) of the isolated DC/DC converter circuit (3), the setpoint (I2cons) of the electrical parameter being such that the regulating circuit (2) delivers to the isolated DC/DC converter circuit (3) an voltage value corresponding to a respective output voltage value of the isolated DC/DC converter circuit (3).

4. Converter (1) according to any one of the preceding Claims, in which the isolated DC/DC converter circuit (1) comprises at least the first isolation transformer (T1) and a second isolation transformer (T2) series connected to the first transformer, the switches (M31, M32) making it possible to transmit energy through the isolated DC/DC converter (3) by way of said transformers (T1, T2), and the output of the regulating circuit (2) being connected to the branch of the isolated DC/DC converter circuit (3) comprising said transformers (T1, T2).

5. Converter according to the preceding claim, in which the isolated DC/DC converter circuit (3) is configured so that:

   - over a first portion of an operating period, the primary winding (L11) of the first transformer (T1) forms an energy storing inductor, and the primary winding (L21) of the second transformer (T2) transfers energy toward the secondary winding (L22) of the second transformer (T2);
   - over a second portion of the operating period, the primary winding (L21) of the second transformer (T2) forms an energy storing inductor, and the primary winding (L11) of the first transformer (T1) transfers energy toward the secondary winding (L12) of the first transformer (T1).

6. Converter (1) according to Claim 4 or 5, in which a magnetizing inductor of at least one of the transformers (T1, T2) is configured so that, at said duty ratio (a), a magnetizing circuit circulating in the transformer (T1, T2) enables a soft switching of the switches (M31, M32) of the isolated DC/DC converter (3).

7. Device (10) for converting voltage comprising at least two voltage converters (1) according to any one of the preceding Claims, the two converters (1) being interlaced; and in which the regulating circuits (2) are configured to operate with a phase shift of $2\pi/n$, and the isolated DC/DC converter circuits (3) are configured to operate with a phase shift of $\pi/n$, n being the number of interlaced voltage converters (1).

8. Device (10) according to Claim 7, comprising converters (1) according to Claim 3, in which the voltage converters (1) share a single circuit (5) used for implementing the first loop, so that the regulating circuits (2) receive the same setpoint (I2cons).

9. Method for converting voltage comprising the steps consisting in:

   - supplying a converter (1) according to Claim 1;
   - controlling the output voltage (Vout) of the isolated DC/DC converter circuit (3) by modifying the voltage delivered to the isolated DC/DC converter (3), the duty ratio (a) of the isolated DC/DC converter circuit (3) remaining constant, said step comprising the modification of a voltage delivered by the regulating circuit (2).

10. Method according to Claim 9, in which the duty ratio (a) of the isolated DC/DC converter circuit (3) is substantially equal to 50%.

11. Method according to Claim 9 or 10, in which the control of the output voltage of the isolated DC/DC converter circuit (3) comprises a first loop locking in the setpoint (I2cons) of an electrical parameter of a signal of the regulating circuit (2) based on a difference between the value (Vout_mes) of the output voltage of the isolated DC/DC converter circuit (3) and an output voltage setpoint (V*) of the isolated DC/DC converter circuit (3), the setpoint (I2cons) of the electrical parameter being such that the isolated DC/DC converter circuit (3) receives an voltage having a value corresponding to a respective output voltage value of the isolated DC/DC converter circuit (3).

12. Method according to one of Claims 9 to 11, comprising the supplying of the isolated DC/DC converter circuit (3) comprising series-connected at least the first and a second isolation transformer (T1, T2); and in which:

   - over a first portion of an operating period of the isolated DC/DC converter circuit (3), the primary winding (L11) of the first transformer (T1) forms an energy storing inductor, and the primary winding (L21) of the second transformer (T2) transfers energy toward the secondary winding (L22) of the second transformer (T2);

- over a second portion of the operating period of the isolated DC/DC converter circuit (3), the primary winding (L21) of the second transformer (T2) forms an energy storing inductor, and the primary winding (L11) of the first transformer (T1) transfers energy toward the secondary winding (L12) of the first transformer (T1).

13. Method according to any one of Claims 9 to 12, comprising the supplying of a plurality of interlaced isolated DC/DC converters (3); and in which:

- the isolated DC/DC converter circuits (3) operate with a phase shift of $\pi/n$, n being the number of interlaced converters; and
- the regulating circuit(s) (2) operate(s) with a phase shift of $2\pi/n$.

14. Method according to Claims 11 and 13, in which the control of the output voltage (Vout) of the isolated DC/DC circuits is implemented with the same setpoint (I2cons) delivered by a single regulating circuit (2).

**Fig. 1**

**Fig. 2**

Fig. 3

Fig. 4

**Fig. 5**

**Fig. 6**

**Fig. 7**

**Fig. 8**

**Fig. 9**

**EP 3 161 951 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5274539 A

- US 5754413 A